# EUROPEAN PATENT APPLICATION

(11) **EP 4 592 450 A1**
(43) Date of publication of application: **30.07.2025**
(21) Application number: 24154017.8
(22) Date of filing: 25.01.2024
(51) Int. Cl.: D06P 1/00, D06P 1/38, D06P 1/62, D06P 1/642, D06P 3/24, D06P 1/384, C09B 62/00, C09B 67/22

(54) **COLORING COMPOSITION FOR POLYAMIDES**

(71) Applicant: Etablissements Robert Stiernon, 7822 Ghislenghien (BE); Blendwell, 7370 Dour (BE)
(72) Inventor: STIERNON, Pierre, 1380 Lasne (BE); MURI, Didier, 7870 Cambron Saint-Vincent (BE)
(74) Representative: Kirkpatrick

(57) **Abstract**

The present application relates to the field of black coloring of textile fibers, and in particular polyamide fibers. A coloring composition for polyamides comprises at least one dye of the reactive type and sulfamic acid, the composition having a pH of 2 or below. It further relates to the process for coloring synthetic textile such as polyamide based textile using the coloring composition, wherein the textile is first immersed in water with the composition added in an amount equivalent to between 10 and 50% of the weight of the textile, the mixture is heated to between 70 °C and 100 °C; sulfamic acid and/or sulfuric acid may be added. Rinsing and drying steps finalize the process.

## Description

The present application relates to the field of black coloring of textile fibers, and in particular polyamide fibers.

There exist many synthetic textiles having a black color. Coloration in black of synthetic fibers and textiles made of synthetic fibers can be challenging, depending on the nature of the fibers. In particular, pantyhose (or tights or close-fitting legwear) are usually made of polyamide fibers like nylon.

To date, all methods for coloring pantyhose in black are relying on chromium based dyes, containing chromium in non-negligeable amounts. However, chromium salts are highly toxic and create environmental problems both at the level of the production of pantyhose (their presence in wastewaters for example) and at the level of disposal of used articles. There are as well health considerations to take into account, as chromium-based compounds are toxic to the skin and can create irritations, especially with such articles as pantyhose which are meant to be worn in close contact with the skin, where there can be humidity (for example from sweat), heat from shearing.

Many attempts have been made to avoid use of chromium for coloring polyamides in black of navy blue. However, yielding an sufficient substantivity (power to absorb a dye on a textile support surface depending on the reactive part of the dye) with a high reactivity, ease of washing off unfixed dye without altering the physical properties of the fibers, like their elasticity, resistance to domestic washing, solidity when worn remains an unmet goal.

For example, coloring compositions combining two types of reactive dyes of specific chemical formulas are disclosed in WO2013/017331A1. While this document mentions the applicability of the coloring compositions to polyamide fibers, all examples relate to cotton fibers, which are typically the type of fibers for which reactive dyes were developed. The efficiency of such dyes to color polyamide fibers has not been demonstrated.

The applicant has therefore judged necessary to further work on the development of black or dark coloring compositions for polyamide based textiles, and in particular pantyhose.

### Solution of the invention

The present invention proposes, for this purpose, a coloring composition for polyamides, comprising at least one dye of the reactive type and sulfamic acid, the composition having a pH of 2 or below. Preferably the composition is an aqueous composition.

Polyamides as used herein designate polymers with repeating units linked by amide bonds, and preferably fibers. Polyamides can be naturally occurring, like for example wool or silk, or synthesized, like for example nylons or aramids.

Reactive dyes are a form of azo dyes well known to the skilled in the art (see for example S. Benkhaya et al., Heliyon 6 (2020*)*)*.* They can be classified in four categories, depending on their chemical constitution:
- Chlorotriazine Dyes (MCT)
- Vinyl Sulphone Dyes (VS)
- Heterocyclic Halogen Containing Dyes (HHC)
- Mixed Dyes (MCT-VS)

Reactive dyes were initially designed to react with the hydroxyl-group present in cellulosic fibers and are usually used in alkaline conditions. pH should be of around 11. Reactive dyes are easily identifiable as their commercial name includes the term "reactive".

Nylon is a polyamide family of polymers. It is known that nylons are susceptible to strong acids, which leads to hydrolysis of the polymer

Despite these *a priori* impossibility to handle both polyamide fibers and reactive dyes at low pH, it was surprisingly found that in the presence of a strong acid at pH as low as 1, the dark dying of polyamides was efficient and did not affect the properties of the textile.

The dyes are classified according to their chemical structure, mainly on the nature of the chromophore, which constitutes the skeleton necessary for the coloring of the molecule. Associated with the chromophore are ionizable groups called " auxochromes " of amine (-NH2), hydroxide (-OH), acid (-COOH), sulfonates (-SO3H), halogens (-Cl, -Br, ...) types, etc. , making it possible to ensure the solubility in water of the molecule, but also to create a more or less solid bond between the dye and the substrate to be colored . The dyes used in basic or alkaline mediums are called reactive dyes and are rather used in the textile industry for coloring baths, and, in particular, for coloring cotton. Examples of reactive dyes are the dyes of the family " Reactive Black 5 " (CAS No. 17095-248) which esters of vinyl sulfone moieties may optionally be substituted by a sulfonate group. These black reactive dyes have a blue shade and are usually called blueish- black or black-blue.

The dye of the reactive type according to the invention can be a single reactive dye or a mixture of reactive dye, like for example a mixture of two reactive dyes, three reactive dye, four reactive dyes or more. The reactive type dye may be a mixture of dyes, and may contain one or more other reactive type dyes, such as the components usually called Reactive Red or Reactive Orange, or any other dye of the same family to vary the shade of black.

The dye of the reactive type preferably represents between 10 and 50 weight%, preferably between 12 and 45 weight%, still preferably between 15 and 40 weight%.

The reactive dye preferably comprises at least one vinylsulfone ester group and preferably at least two vinylsulfone ester groups.

For coloring synthetic textiles in dark color, i.e. in black, at least one dye of the reactive type of the composition is a reactive black dye, like for example Reactive Black 5 (CAS: 17095-24-8).

When the composition comprises Reactive Black 5, it is preferably present between 4 and 15 weight%, preferably between 5 and 13 weight%.

For intense coloration of pantyhose in black, Reactive Black 5 can be used in combination with a Reactive Orange dye, like for example Reactive Orange 131 (CAS: 187026-95-5) and/or Reactive Orange ODS (CAS: 607724-37-8) or a Reactive Red dye. The reactive orange dye(s) are for example present between 6 and 35 weight%, preferably between 8 and 32weight%, preferably between 10 and 30 weight%.

Other colors can be achieved from other reactive dyes or other mixtures of reactive dyes.

The composition comprises sulfamic acid as identified by CAS number 5329-14-6. The amount of sulfamic acid in the composition is preferably between 2 and 15weight%, preferably between 3 and 12weight%, still preferably between 5 and 10 weight%. The concentration of sulfamic acid in the composition depends on the reactive dyes used, and is adapted within this range to optimize the stability of the composition.

Preferably, the composition also comprises a strong acid. The strong acid in the composition is preferably sulfuric acid, preferably concentrated sulfuric acid like ≥62% sulfuric acid or ≥78% sulfuric acid or ≥ 93% sulfuric acid or ≥98% sulfuric acid (CAS 7676-639-5).

When ≥98% sulfuric acid is used, it preferably represents 5 to 30% of the composition, preferably between 8 and 25%, still preferably between 10 and 20%. Such proportions ensure a very low pH of below 2 and preferably of 1 or below. The concentration of sulfuric acid in the composition depends on the reactive dyes used, and is adapted within this range to optimize the stability of the composition. The applicant has found that the best coloring results, and in particular coloring in black of polyamides based textile, were obtained at very low pH. Instead of preparing a standard mixture of dyes which would need to be combined with a strong acid in the coloring process, the applicant has dared including directly the strong acid in the composition. This avoid that the textile manufacturer has to store and use a strong acid, which would involve heavy modifications to his manufacturing line, operators trainings for safety... The composition of the invention is an off the shelf replacement of chromium-based coloring compositions and thereby allows easy switch on manufacturing lines.

The coloring composition according to the invention is preferably devoid of any chromium species.

By black, it is here referred to the visual perception of a human eye. The human eye perceives as black objects reflecting none or very few visible wavelengths. From a purely scientific point of view, black within the meaning of the invention can be extended to other very dark colors close to absolute black, such as brown, navy blue ...

The invention also relates to a process for coloring polyamides using the composition of the invention. The coloring composition of the invention is a concentrated solution, which can be further diluted during the process of coloring textile. The process comprises the steps of:
- Immersing, in a reactor, the textile in water with the composition of the invention , the composition being added in an amount equivalent to between 10 and 50% of the weight of the textile;
- Heating the content of the reactor to between 70 °C and 100 °C;
- If necessary, adding sulfamic acid;
- If necessary, adding sulfuric acid;
- Cooling down the content of the reactor;
- Drain the reactor, and
- Rinse the colored textile.

For coloring polyamide, in order to prevent breakage of the fibers, it is possible to add into the reactor, with the coloring composition, an anti-breakage agent, as is well known by the person skilled in the art. For example, amounts between 0.1 g/L and 5 g/L, preferably between 0.5 and 2 g/L or preferably around 1 g/L of anti-breakage agent can be added. Such agent is for example a micro-polyamide or derivative thereof.

Heating of the content of the reactor can be realized at various speeds, depending on the equipment. Temperature gradients of between 1 °C/min and 10 °C/min are commonly used, preferably gradients between 1.5°C/min and 5 °C/min or even preferably around 2 °C/min can be used. The heating steps can comprise one or several plateaus to stabilize the mixture at a given temperature.

For example, for polyamide, it can be interesting to insert a plateau at around 80°C before heating up to 100°C.

The heating is maintained during a suitable period of time, which can vary depending on the type of textile and/or the nature of the dye(s) used. For example the heating is maintained between 20 minutes and several hours, like 1.5h, 2h, 3h, 4h or more. During this step, the pH in the reactor is very low, i.e. below 2 and preferably around 1.5, 1.2 or 1.

Depending on the content of sulfamic acid, and possibly of sulfuric acid, in the coloring composition, it can be necessary to add further these compounds during the process, during the heating phase in order to optimize the dye uptake by the fiber (exhaustion of the dye). Ideally, the drained liquids should be almost devoid of dye. However, in practice, there is always remaining dye in the wastewater.

The content of the reactor is then cooled down, preferably at a temperature of below 70°C, and preferably to room temperature.

The rector is then drain, i.e. the liquid content is removed, leaving the colored textile in the reactor. To remove the traces of unreacted dye, a classical rinsing step is applied, using water. Water is added to the reactor, left for a period of time, for example several minutes, and then drained. Rinsing can be performed one or more times, some occurrences may involve additives like soaps, alkaline agents, or any other additive commonly used in the field of textile coloration for rinsing. Rinsing can be performed at any suitable temperature, like room temperature, mild temperature, hot temperature.

Optionally, after rinsing, a further step of fixation of the dye can be applied. This involves placing the textile in water with a fixative. Fixatives are well known in the field of textile coloration. They can be anionic and/or cationic fixatives. In some cases, it can be useful to adjust the pH to a certain value to optimize fixation. This fixation step can be run at temperatures between 10°c and 100 °C, depending on the fiber and the type of dye.

Depending on the nature of the textile, it can be useful to further add further treatments steps.

For example, to ensure the solidity of the fibers, the process can comprise a specific treatment, between rinsing steps.

For example, it was found that, for polyamide pantyhose, a treatment with a dispersing detergent emulsifying agent, like for example an ethoxylated fatty alcohol, at a temperature between 70°c and 100°C was found to allow retention of the solidity of the fibers, which could be otherwise weakened by the strong acid treatment.

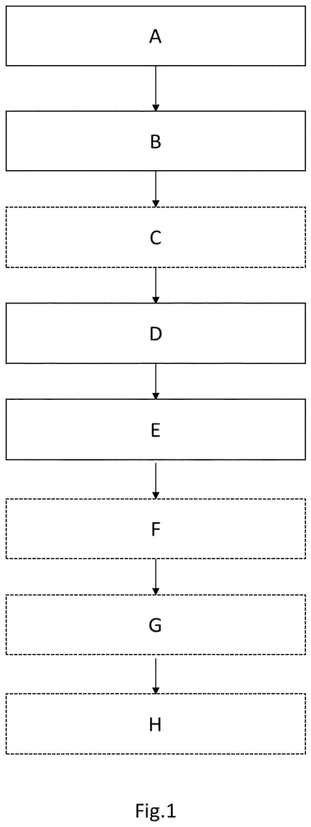

The invention will be better understood using the following description of several implementations of the invention in relation with the drawing where fig.1 illustrates the process for coloring polyamide based textiles according to the invention.

Percentages expressed herein are per default percentages by weight, such as usually used in the technical field of the coloring compositions.

### Example 1

An aqueous coloring composition was prepared by combining the following compounds (weight%):
- 10 to 20% of Reactive orange 131 (Benzenesulfonic acid, 2,4-diamino-3-4-2-(sulfooxy)ethylsulfonylphenylazo-5-2-sulfo-4-2-(sulfooxy)ethylsulfonylphenylazo-, potassium sodium salt, CAS number 187026-95-5)
- 10 to 20% sulfuric acid CP (CAS number 7664-93-9;
- 6.4 to 11.1% of Reactive black 5 (tetrasodium 4-amino-5-hydroxy-3,6-bis[[4-[[2-(sulphonatooxy)ethyl]sulphonyl]phenyl]azo]naphtalène-2,7-disulphonate, CAS number 17095-24-8)
- 5 to 10% of Sulfamic acid (CAS number 5329-14-6),
- 3 to 8% of Reactive Orange ODS (2-Naphthalenesulfonic acid, 7-amino-4-hydroxy-3-[2-[4-[[2-(sulfooxy)ethyl]sulfonyl]phenyl]diazenyl]-8-[2-[2-sulfo-4-[[2-(sulfooxy)ethyl]sulfonyl]phenyl] diazenyl]-, sodium salt (1:4); CAS number 607724-37-8
- Water for the remaining weight %.

### Example 2

The coloring composition of example 1 was used for coloring pantyhose in polyamide in black.

With reference to figure 1 (wherein step not necessary in all situations but were used in this specific case are identified with dotted lines), in a step A, An inox reactor was loaded with polyamide pantyhose. Water at 25°C was added. 28 weight%, calculated with regards to the weight of the pantyhose, of the coloring composition of example 1 was added as well as 1 g/L of an anti-breaking agent (here ALPATEX HYD NEW commercialized by Alpasud).

In step B, the mixture was heated to 80°C at 2 °C/min, the temperature was maintained at 80°C for 10 minutes and the mixture was further heated to 100°C at 2 °C/min.

In step C, an aqueous solution containing about 25 weight% or less of sulfuric acid and 5 weight% or less of sulfamic acid was added at 100°C over 45 min, and the heating was maintained for a further 45 minutes.

In step D, the mixture was then cooled to 90 °C and the reactor was drained.

In step E, water at 25 °C was added in the reactor and left to overflow for 6 minutes before being drained.

In step F, water at 45 °C was added in the reactor and a solution containing between 10 and 17 weight% of Benzenesulfonic acid, hydroxy-, monosodium salt, reaction products with formaldehyde and sulfonylbis[phenol], sodium salts (CAS number 90218-44-3) was added as fixative, the mixture was heated to 90°C for 20 min and the reactor was drained.

In step G, water at 45 °C was added to the reactor and 1g/L of a solution containing between 16 weight% and 35 weight% of ethoxylated fatty alcohol (CAS number 68439-49-6) was added. The pH was further adjusted to 3.5. and the mixture was heated to 100°C for 10 minutes before being cooled to 90 °C and drained.

In step H, a further simple rinsing with water at 45°C and a subsequent rinsing with water at 25 °C was performed. The pantyhose were discharged from the reactor and dried.

### Example 3

The pantyhose obtained in example 2 were qualified according to their fastness to perspiration both in acidic and alkaline conditions, according to the procedure defined in DIN IEN ISO 105-E4(2013). The pantyhose was found to be compliant to the allowed ranges defined by the customer (between 3 / 4 and 5)

### Example 4

The pantyhose obtained in example 2 were qualified according to fastness to water test, according to the procedure defined in DIN IEN ISO 105-E1 (2013). The pantyhose was found to be compliant to the allowed ranges defined by the customer (between 3 / 4 and 5)

### Example 5

The pantyhose obtained in example 2 were qualified according to their dry rubbing fastness, according to the procedure defined in DIN IEN ISO 105-X12(2013). The pantyhose was found to be compliant to the allowed ranges defined by the customer (between 4/5 and 5).

### Example 6

For the control of color of the PA fabrics, The Δ*E** is determined in the CIELAB referential under standard illuminant D65 by a colorimetric device and compared to the client requirement. Δ*E** was here found to be lower than 1 as expected by the customer.

## Claims

1. Coloring composition for synthetic textiles, comprising at least one dye of the reactive type and sulfamic acid, the composition having a pH of 2 or below.

2. Coloring composition according to claim 1, wherein the composition is an aqueous composition.

3. Coloring composition according to one of claim 1 and 2, wherein the dye of the reactive type according to the invention is a single reactive dye or a mixture of reactive dye.

4. Coloring composition according to anyone of claim 1 to 3, wherein the dye of the reactive type preferably represents between 10 and 50 weight% of the composition.

5. Coloring composition according to anyone of claim 1 to 4, wherein the reactive dye comprises at least one vinylsulfone ester group and preferably at least two vinylsulfone ester groups.

6. Coloring composition according to anyone of claim 1 to 5, wherein at least one dye of the reactive type of the composition is a reactive black dye, like for example Reactive Black 5.

7. Coloring composition according to anyone of claim 1 to 6, wherein the composition comprises a strong acid.

8. Coloring composition according to claim 7, wherein the strong acid is sulfuric acid.

9. Coloring composition according to claim 8, wherein sulfuric acid represents 5 to 30 weight% of the composition

10. Coloring composition according to anyone of claim 1 to 9, wherein sulfamic acid represents between 2 and 15weight% of the composition.

11. Process for coloring synthetic textile such as polyamide based textile comprises the steps of:
- Immersing, in a reactor, the textile in water with the composition according to any of claims 1 to 10 , the composition being added in an amount equivalent to between 10 and 50% of the weight of the textile;
- Heating the content of the reactor to between 70 °C and 100 °C;
- If necessary, adding sulfamic acid;
- If necessary, adding surlfuric acid;
- Cooling down the content of the reactor;
- Draining the reactor, and
- Rinsing the colored textile.

12. Process according to claim 11, wherein an anti-breaking agent is added in the reactor with the coloring composition.

13. Process according to claim 11 or 12, wherein rinsing comprises at least two rinsing steps.
